# EUROPEAN PATENT SPECIFICATION

(11) **EP 4 068 603 B1**
(45) Date of publication and mention of the grant of the patent: **04.11.2026**
(21) Application number: 21763898.0
(22) Date of filing: 08.01.2021
(51) Int. Cl.: B60L 15/00, B60L 58/13, H02J 7/90, H02J 7/34, H02M 1/00, H02M 3/04, H02J 7/00

(54) **METHOD AND DEVICE FOR CONTROLLING DCDC CONVERTER**
VERFAHREN UND VORRICHTUNG ZUR STEUERUNG EINES GLEICHSTROMWANDLERS
PROCÉDÉ ET DISPOSITIF DE COMMANDE DE CONVERTISSEUR CCCC

(30) Priority: 02.03.2020 CN 202010137252
(43) Date of publication of application: 05.10.2022
(73) Proprietor: Great Wall Motor Company Limited, Baoding, Hebei 071000 (CN)
(72) Inventor: SUN, Zhaolue, Baoding, Hebei 071000 (CN); LI, Zepeng, Baoding, Hebei 071000 (CN); QIAN, Chao, Baoding, Hebei 071000 (CN); SONG, Haijun, Baoding, Hebei 071000 (CN)
(74) Representative: dompatent
(86) International application number: PCT/CN2021/070961
(87) International publication number: WO 2021/175011

(56) References cited:
- WO-A1-2008/007724
- CN-A- 101 207 331
- CN-A- 105 764 741
- CN-A- 110 126 672
- CN-A- 111 262 428
- DE-A1- 102014 225 827
- JP-A- 2005 304 122
- KR-A- 20170 047 838

## Description

The present application claims the priority of the Chinese patent application filed on March 02nd, 2020 before the Chinese Patent Office with the application number of 202010137252.4 and the title of "METHOD AND DEVICE FOR CONTROLLING DCDC **CONVERTER".**

### TECHNICAL FIELD

The present disclosure relates to the technical field of vehicle controlling, and more particularly, to a method and apparatus for controlling a DCDC converter.

### BACKGROUND

With the development in the technical field of vehicle controlling, the Direct Current Direct Current (DCDC) converter is an important component for maintaining the normal operation of the low-voltage loop for a hybrid-power vehicle, and its function is to convert the high voltage inputted by the power source such as a high-voltage battery and a generator into a low voltage required by a low-voltage load such as a storage battery.

The conversion efficiency of the DCDC converter is an important parameter of the DCDC converter. Currently, in order to ensure the conversion efficiency of the DCDC converter, the voltage at its output terminal should be non-constant, which means that it is required that the power of the input terminal should be dynamically followed. A single input power constraint cannot satisfy the electricity-consumption requirements in various working conditions. A too low power constraint affects the normal usage of the low-voltage components and the stability of the vehicle controller. If the power constraint is too high, the DCDC converter does not reach the maximum usage efficiency, which results in the waste of the energy of the hybrid-power vehicle.

However, by merely calculating from the output terminal of the DCDC converter, the restriction strategy is not abundant. Only the protection of the stability of the low-voltage controller and the safety of the low-voltage storage battery are taken into consideration, and the allocation of the power source at the input terminal is not comprehensively considered, which cannot satisfy multiple combined working conditions in which the power source of the input terminal is sufficient or insufficient, and results in that the DCDC converters have few uses and the accuracy is low.

Document WO 2008/007724 A1 relates to a power supply system having a plurality of battery units, a vehicle provided with the same and a temperature managing method, and particularly to a technique that implements temperature management of the battery device including a chemical cell while suppressing an influence on supply/reception of an electric power to/from a load device.

### SUMMARY

In view of the above, the present disclosure provides a method and apparatus for controlling a DCDC converter, to solve the problems of DCDC converters of few uses and the accuracy is low.

In order to achieve the above object, the technical solutions of the present disclosure are realized as follows:

The invention is defined by the appended claims.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

In order to more clearly illustrate the technical solutions of the embodiments of the present disclosure or the prior art, the figures that are required to describe the embodiments or the prior art will be briefly introduced below. Apparently, the figures that are described below are embodiments of the present disclosure, and a person skilled in the art can obtain other figures according to these figures without paying creative work.

The drawings, which form part of the present disclosure, are intended to provide a further understanding of the present disclosure. The illustrative embodiments of the present disclosure and their explanation are intended to interpret the present disclosure, and do not inappropriately limit the present disclosure. In the drawings:
FIG. 1 shows a flow chart of the steps of the method for controlling a DCDC converter according to the first embodiment of the present disclosure;
FIG. 2 shows a flow chart of the steps of the method for controlling a DCDC converter according to the second embodiment of the present disclosure;
FIG. 3 shows a schematic structural diagram of a DCDC converting system according to an embodiment of the present disclosure;
FIG. 4 shows a schematic diagram of the acquirement of the first preset value corresponding to the input-terminal power according to an embodiment of the present disclosure;
FIG. 5 shows a schematic diagram of the acquirement of the second preset value corresponding to the input-terminal power according to an embodiment of the present disclosure;
FIG. 6 shows a schematic diagram of the determination on the input-terminal target-power limit value according to the second embodiment of the present disclosure;
FIG. 7 shows a schematic structural diagram of the apparatus for controlling a DCDC converter according to the third embodiment of the present disclosure;
FIG. 8 schematically shows a block diagram of a calculating and processing device for implementing the method according to the present disclosure; and
FIG. 9 schematically shows a storage unit for maintaining or carrying a program code for implementing the method according to the present disclosure.

### DETAILED DESCRIPTION OF THE EMBODIMENTS

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

It should be noted that, subject to the avoiding of any conflict, the embodiments and the features of the embodiments of the present disclosure may be combined.

The present disclosure will be described in detail below with reference to the drawings and the embodiments.

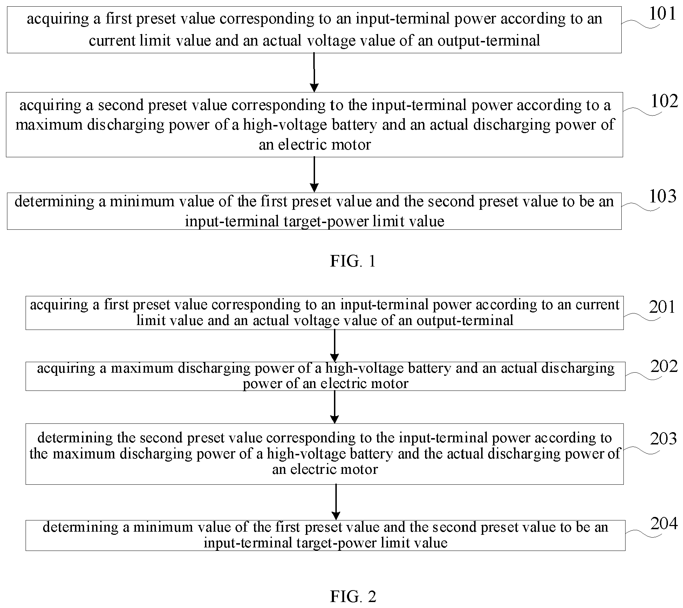

Referring to FIG. 1, FIG. 1 shows a flow chart of the steps of the method for controlling a DCDC converter according to the first embodiment of the present disclosure. The method for controlling a DCDC converter may be applied to a hybrid-power vehicle.

As shown in FIG. 1, the method for controlling a DCDC converter may particularly include the following steps:

Step 101: acquiring a first preset value corresponding to an input-terminal power according to a current limit value and an actual voltage value of an output-terminal.

The DCDC converter is an important component for maintaining the normal operation of the low-voltage loop for a hybrid-power vehicle, and its function is to convert the high voltage inputted by the power source such as a high-voltage battery and a generator into a low voltage required by a low-voltage load such as a storage battery. In order to ensure the conversion efficiency of the DCDC converter, the voltage at the output terminal should be non-constant, which means that it is required that the power of the input terminal should be dynamically followed. A single input power constraint cannot satisfy the electricity-consumption requirements in various working conditions. A too low power constraint affects the normal usage of the low-voltage components and the stability of the vehicle controller. If the power constraint is too high, the DCDC converter does not reach the maximum usage efficiency, which results in the waste of the energy of the hybrid-power vehicle.

The first preset value corresponding to the input-terminal power refers to the first preset value of the constraint of the input-terminal power of the DCDC converter.

In an embodiment of the present disclosure, the particular implementation process of the step 101 may include:

Sub-step S1: acquiring the current limit value and the actual voltage value of the output terminal; and acquiring a conversion efficiency of the DCDC converter.

Acquiring the current limit value of the output terminal may include: firstly, acquiring a current protection value of a low-voltage loop and a storage-battery current limit value; and, subsequently determining the current limit value of the output terminal according to the current protection value and the storage-battery current limit value.

By fully considering the influence of current on the storage battery life on the precondition that the protection current of the low-voltage loop is not exceeded, the calculation is performed according to the current protection value of the low-voltage loop and the storage-battery current limit value. The storage-battery current limit value is calibrated based on the temperature and the quantity of electric charge, and its particular value is not limited in the embodiments of the present disclosure, and may be adjusted according to particular practical applications.

Sub-step S2: determining the first preset value corresponding to the input-terminal power according to the current limit value and the actual voltage value of the output terminal and the conversion efficiency of the DCDC converter.

The current limit value of the output terminal refers to the current limit value at the output terminal of the DCDC converter. According to the current limit value and the actual voltage value of the output terminal and the conversion efficiency of the DCDC converter, the first preset value corresponding to the input-terminal power is determined.

After acquiring the first preset value corresponding to the input-terminal power according to the current limit value and the actual voltage value of the output-terminal, , the step 102 is executed.

Step 102: acquiring a second preset value corresponding to the input-terminal power according to a maximum discharging power of a high-voltage battery and an actual discharging power of an electric motor.

The second preset value corresponding to the input-terminal power refers to the second preset value of the constraint of the input-terminal power of the DCDC converter. The maximum discharging power refers to the maximum continuous-discharging power of the battery, and particularly refers to the maximum discharging capacity of the battery within 10 seconds that is sent by the battery managing system according to the real-time parameters (for example, the quantity of electric charge and the temperature). The actual discharging power of an electric motor refers to the actual electric power that is obtained by the electric-machine controlling unit by calculation according to the discharging current and voltage detected by itself in the generation state.

This step may include, firstly, acquiring a maximum discharging power of a high-voltage battery and an actual discharging power of an electric motor; and, subsequently, determining the second preset value corresponding to the input-terminal power according to the maximum discharging power of a high-voltage battery and the actual discharging power of an electric motor.

Particularly, the actual states of the high-voltage battery and the electric motor may serve as the determining conditions for selecting different calculating methods. The electric motor can be divided into a driving state and a generating state. The high-voltage battery can be divided into a discharging state and a charging state.

When the electric motor is in the driving state, the maximum discharging power of a high-voltage battery is determined to be the second preset value corresponding to the input-terminal power.

It should be noted that, when the electric motor is in the driving state, the high-voltage battery is in and can merely be in the discharging state, at which point the function of the electric motor is to convert the electric energy supplied by the high-voltage battery into the mechanical energy for the driving of the entire vehicle, and the high-voltage battery is the unique power-supply device in the high-voltage power system. Therefore, the maximum discharging power of a high-voltage battery is used as the second preset value corresponding to the input-terminal power.

When the electric motor is in the generation state, the sum of the absolute value of the maximum discharging power of a high-voltage battery and the absolute value of the actual discharging power of an electric motor is determined to be the second preset value corresponding to the input-terminal power.

It should be noted that, when the electric motor is in the generation state, the electric motor converts its own mechanical energy into electric energy, and the electric energy that it generates is preferentially supplied to the high-voltage loads such as the DCDC converter. If the supply of the electric motor is insufficient, the high-voltage battery supplements (the electric motor is in the discharging state), at which point the electric motor and the high-voltage battery jointly serve as the power-supply device in the high-voltage power system. If the supply of the electric motor is sufficient, the remaining electric energy is stored in the high-voltage battery (the battery is in the charging state), at which point the electric motor is the unique power-supply device in the high-voltage power system. In other words, when the electric motor is in the generation state and the high-voltage battery is in the discharging state, the sum of the absolute value of the maximum discharging power of a high-voltage battery and the absolute value of the actual discharging power of an electric motor is determined to be the second preset value corresponding to the input-terminal power.

When the electric motor is in the generation state and the high-voltage battery is in the charging state, the absolute value of the actual discharging power of an electric motor is determined to be the second preset value corresponding to the input-terminal power.

It should be noted that, when the electric motor is in the discharging state and the high-voltage battery is in the charging state, the electric motor converts its own mechanical energy into electric energy, part of the electric energy that the electric motor generates is supplied to the high-voltage loads such as the DCDC converter, and the excessive part is stored in the high-voltage battery (the battery is in the charging state), at which point the electric motor and the high-voltage battery jointly serve as the power-supply device in the high-voltage power system, and the absolute value of the actual discharging power of an electric motor is determined to be the second preset value corresponding to the input-terminal power.

After acquiring the second preset value corresponding to the input-terminal power according to the maximum discharging power of a high-voltage battery and the actual discharging power of an electric motor, the step 103 is executed.

Step 103: determining a minimum value of the first preset value and the second preset value to be an input-terminal target-power limit value.

The minimum value of the first preset value and the second preset value is selected as the maximum power limit value of the DCDC converter, i.e., as the input-terminal target-power limit value.

The method for controlling a DCDC converter according to the embodiments of the present disclosure includes, acquiring a first preset value corresponding to an input-terminal power according to an current limit value and an actual voltage value of an output-terminal; acquiring a second preset value corresponding to the input-terminal power according to a maximum discharging power of a high-voltage battery and an actual discharging power of an electric motor; and determining a minimum value of the first preset value and the second preset value to be an input-terminal target-power limit value. The method takes into consideration multiple combined working conditions in which the power source of the input terminal is sufficient or insufficient, which improves the safety of the low-voltage system and the stability of the vehicle controller of the hybrid-power vehicle, ensures the usage efficiency of the DCDC converter to the utmost extent, and improves the use diversity and the accuracy of the DCDC converter.

Referring to FIG. 2, FIG. 2 shows a flow chart of the steps of the method for controlling a DCDC converter according to the second embodiment of the present disclosure. The method for controlling a DCDC converter is applied to a hybrid-power vehicle.

As shown in FIG. 2, the method for controlling a DCDC converter may particularly include the following steps:
Step 201: acquiring a first preset value corresponding to an input-terminal power according to an current limit value and an actual voltage value of an output-terminal.

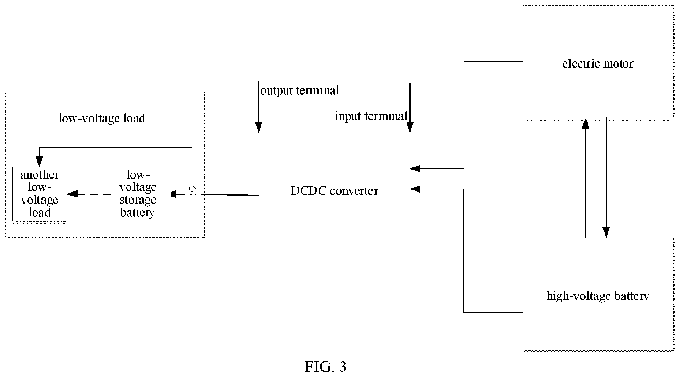

The first preset value corresponding to the input-terminal power refers to the first preset value of the constraint of the input-terminal power of the DCDC converter. FIG. 3 shows a schematic structural diagram of a DCDC converting system according to an embodiment of the present disclosure. as shown in FIG. 3, the system includes a low-voltage load, a DCDC converter, an electric motor and a high-voltage battery. The low-voltage load may include a low-voltage storage battery and another low-voltage load. The DCDC converter may include an input terminal and an output terminal.

In an embodiment of the present disclosure, the particular implementation process of the step 101 may include:
Sub-step S1: acquiring the current limit value of the output terminal, and the conversion efficiency and the actual voltage value of the DCDC converter.

Acquiring the current limit value of the output terminal may include: firstly, acquiring a current protection value of a low-voltage loop and a storage-battery current limit value; and, subsequently, determining the current limit value of the output terminal according to the current protection value and the storage-battery current limit value.

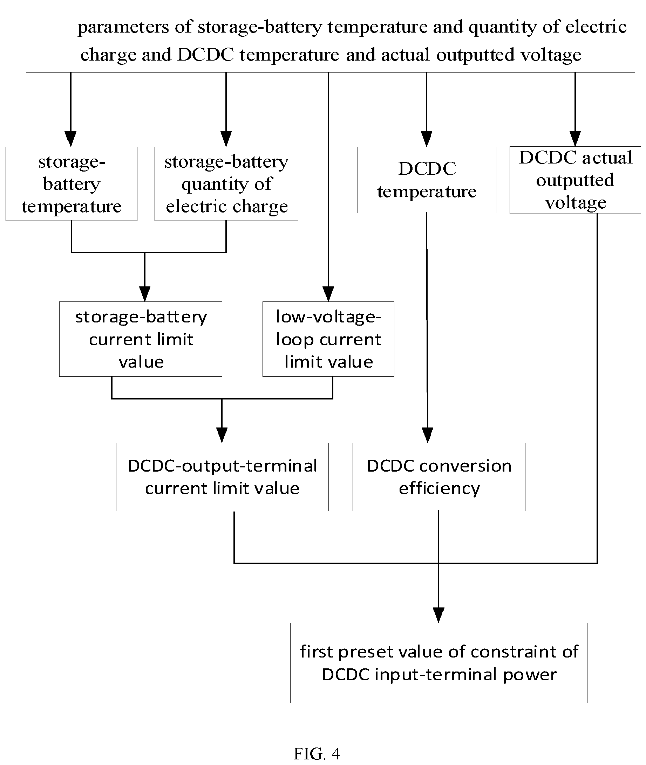

Referring to FIG. 4, FIG. 4 shows a schematic diagram of the acquirement of the first preset value corresponding to the input-terminal power according to an embodiment of the present disclosure. By fully considering the influence of current on the storage battery life on the precondition that the protection current of the low-voltage loop is not exceeded, the calculation is performed according to the current protection value of the low-voltage loop and the storage-battery current limit value. The storage-battery current limit value is calibrated based on the temperature and the quantity of electric charge, and its particular value is not limited in the embodiments of the present disclosure, and may be adjusted according to particular practical applications.

Sub-step S2: according to the current limit value and the actual voltage value of the output terminal and the conversion efficiency of the DCDC converter, determining the first preset value corresponding to the input-terminal power.

The current limit value of the output terminal refers to the current limit value at the output terminal of the DCDC converter. According to the current limit value and the actual voltage value of the output terminal and the conversion efficiency of the DCDC converter, the first preset value corresponding to the input-terminal power is determined.

After acquiring the first preset value corresponding to the input-terminal power according to the current limit value and the actual voltage value of the output-terminal, the step 202 is executed.

Step 202: acquiring a maximum discharging power of a high-voltage battery and an actual discharging power of an electric motor.

The second preset value corresponding to the input-terminal power refers to the second preset value of the constraint of the input-terminal power of the DCDC converter. The maximum discharging power refers to the maximum continuous-discharging power of the battery, and particularly refers to the maximum discharging capacity of the battery within 10 seconds that is sent by the battery managing system according to the real-time parameters (for example, the quantity of electric charge and the temperature). The actual discharging power of an electric motor refers to the actual electric power that is obtained by the electric-machine controlling unit by calculation according to the discharging current and voltage detected by itself in the generation state.

This step may include, firstly, acquiring a maximum discharging power of a high-voltage battery and an actual discharging power of an electric motor, and, subsequently, executing the step 203.

Step 203: determining the second preset value corresponding to the input-terminal power according to the maximum discharging power of a high-voltage battery and the actual discharging power of an electric motor.

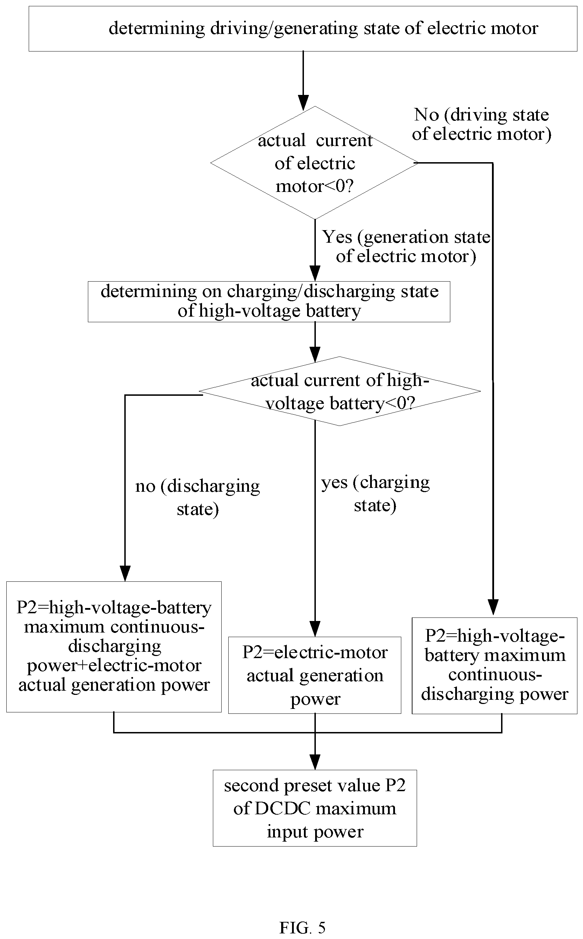

Particularly, the actual states of the high-voltage battery and the electric motor may serve as the determining conditions for selecting different calculating methods. The electric motor can be divided into a driving state and a generation state. The high-voltage battery can be divided into a discharging state and a charging state. Referring to FIG. 5, FIG. 5 shows a schematic diagram of the acquirement of the second preset value corresponding to the input-terminal power according to an embodiment of the present disclosure. When the actual current of the electric motor is less than 0, the electric motor is in the generation state. When the actual current of the electric motor is greater than or equal to 0, the electric motor is in the driving state. When the actual current of the high-voltage battery is less than zero, the high-voltage battery is in the charging state. When the actual current of the high-voltage battery is greater than or equal to 0, the high-voltage battery is in the discharging state.

When the electric motor is in the driving state, the maximum discharging power of a high-voltage battery is determined to be the second preset value corresponding to the input-terminal power (P₂).

It should be noted that, when the electric motor is in the driving state, the high-voltage battery is in and can merely be in the discharging state, at which point the function of the electric motor is to convert the electric energy supplied by the high-voltage battery into the mechanical energy for the driving of the entire vehicle, and the high-voltage battery is the unique power-supply device in the high-voltage power system. Therefore, the maximum discharging power of a high-voltage battery is used as the second preset value corresponding to the input-terminal power.

When the electric motor is in the generation state, the sum of the absolute value of the maximum discharging power of a high-voltage battery and the absolute value of the actual discharging power of an electric motor is determined to be the second preset value corresponding to the input-terminal power.

It should be noted that, when the electric motor is in the generation state, the electric motor converts its own mechanical energy into electric energy, and the electric energy that it generates is preferentially supplied to the high-voltage loads such as the DCDC converter. If the supply of the electric motor is insufficient, the high-voltage battery supplements (the electric motor is in the discharging state), at which point the electric motor and the high-voltage battery jointly serve as the power-supply device in the high-voltage power system. If the supply of the electric motor is sufficient, the remaining electric energy is stored in the high-voltage battery (the battery is in the charging state), at which point the electric motor is the unique power-supply device in the high-voltage power system. In other words, when the electric motor is in the generation state and the high-voltage battery is in the discharging state, the sum of the absolute value of the maximum discharging power of a high-voltage battery and the absolute value of the actual discharging power of an electric motor is determined to be the second preset value corresponding to the input-terminal power.

When the electric motor is in the generation state and the high-voltage battery is in the charging state, the absolute value of the actual discharging power of an electric motor is determined to be the second preset value corresponding to the input-terminal power.

It should be noted that, when the electric motor is in the discharging state and the high-voltage battery is in the charging state, the electric motor converts its own mechanical energy into electric energy, part of the electric energy that the electric motor generates is supplied to the high-voltage loads such as the DCDC converter, and the excessive part is stored in the high-voltage battery (the battery is in the charging state), at which point the electric motor and the high-voltage battery jointly serve as the power-supply device in the high-voltage power system, and the absolute value of the actual discharging power of an electric motor is determined to be the second preset value corresponding to the input-terminal power.

After acquiring the second preset value corresponding to the input-terminal power according to the maximum discharging power of a high-voltage battery and the actual discharging power of an electric motor, the step 204 is executed.

Step 204: determining a minimum value of the first preset value and the second preset value to be an input-terminal target-power limit value.

The minimum value of the first preset value and the second preset value is selected as the maximum power limit value of the DCDC converter, i.e., as the input-terminal target-power limit value.

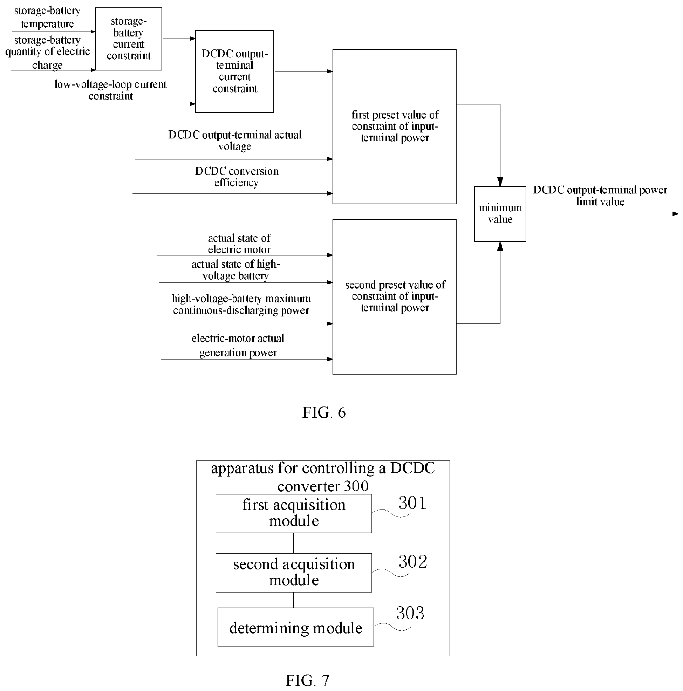

FIG. 6 shows a schematic diagram of the determination on the input-terminal target-power limit value according to an embodiment of the present disclosure. The process includes, according to an current limit value and an actual voltage value of an output-terminal, acquiring a first preset value corresponding to an input-terminal power; acquiring a maximum discharging power of a high-voltage battery and an actual discharging power of an electric motor; according to the maximum discharging power of a high-voltage battery and the actual discharging power of an electric motor, acquiring a second preset value corresponding to the input-terminal power; and determining a minimum value of the first preset value and the second preset value to be an input-terminal target-power limit value.

The method for controlling a DCDC converter according to the embodiments of the present disclosure includes, acquiring a first preset value corresponding to an input-terminal power according to an current limit value and an actual voltage value of an output-terminal; acquiring a maximum discharging power of a high-voltage battery and an actual discharging power of an electric motor; acquiring a second preset value corresponding to the input-terminal power according to the maximum discharging power of a high-voltage battery and the actual discharging power of an electric motor; and determining a minimum value of the first preset value and the second preset value to be an input-terminal target-power limit value. The method takes into consideration multiple combined working conditions in which the power source of the input terminal is sufficient or insufficient, which improves the safety of the low-voltage system and the stability of the vehicle controller of the hybrid-power vehicle, ensures the usage efficiency of the DCDC converter to the utmost extent, and improves the use diversity and the accuracy of the DCDC converter.

Referring to FIG. 7, FIG. 7 shows a schematic structural diagram of the apparatus for controlling a DCDC converter according to the third embodiment of the present disclosure. The apparatus for controlling a DCDC converter is applied to a hybrid-power vehicle.

As shown in FIG. 7, the apparatus for controlling a DCDC converter 300 may particularly include:
a first acquisition module 301 configured for, acquiring a first preset value corresponding to an input-terminal power according to an current limit value and an actual voltage value of an output-terminal;
a second acquisition module 302 configured for, acquiring a second preset value corresponding to the input-terminal power according to a maximum discharging power of a high-voltage battery and an actual discharging power of an electric motor; and
a determining module 303 configured for determining a minimum value of the first preset value and the second preset value to be an input-terminal target-power limit value.

Optionally, the first acquisition module includes:
a first acquisition submodule configured for acquiring the current limit value and the actual voltage value of the output terminal;
a second acquisition submodule configured for acquiring a conversion efficiency of the DCDC converter; and
a first determining submodule configured for, determining the first preset value corresponding to the input-terminal power according to the current limit value and the actual voltage value of the output terminal and the conversion efficiency of the DCDC converter.

Optionally, the first acquisition submodule includes:
an acquisition unit configured for acquiring a current protection value of a low-voltage loop and a storage-battery current limit value; and
a first determining unit configured for, determining the current limit value of the output terminal according to the current protection value and the storage-battery current limit value.

Optionally, the second acquisition module includes:
a second determining submodule configured for, when an electric motor is in a driving state, determining the maximum discharging power of a high-voltage battery to be the second preset value corresponding to the input-terminal power.

Optionally, the second acquisition module includes:
a third determining submodule configured for, when an electric motor is in a generation state, determining a sum of an absolute value of the maximum discharging power of a high-voltage battery and an absolute value of the actual discharging power of an electric motor to be the second preset value corresponding to the input-terminal power.

Optionally, the second acquisition module includes:
a fourth determining submodule configured for, when the electric motor is in a generation state and a high-voltage battery is in a charging state, determining an absolute value of the actual discharging power of an electric motor to be the second preset value corresponding to the input-terminal power.

The particular implementations of the apparatus for controlling a DCDC converter according to the embodiments of the present disclosure have already been described in detail in the process section, and are not discussed herein further.

The apparatus for controlling a DCDC converter according to the embodiments of the present disclosure can, by using the first acquisition module, acquiring a first preset value corresponding to an input-terminal power according to an current limit value and an actual voltage value of an output-terminal; subsequently, by using the second acquisition module, acquiring a second preset value corresponding to the input-terminal power according to a maximum discharging power of a high-voltage battery and an actual discharging power of an electric motor; and finally, by using the determining module, determining a minimum value of the first preset value and the second preset value to be an input-terminal target-power limit value. The apparatus takes into consideration multiple combined working conditions in which the power source of the input terminal is sufficient or insufficient, which improves the safety of the low-voltage system and the stability of the vehicle controller of the hybrid-power vehicle, ensures the usage efficiency of the DCDC converter to the utmost extent, and improves the use diversity and the accuracy of the DCDC converter.

The above description is merely preferable embodiments of the present disclosure, and is not indented to limit the present disclosure. Any modifications, equivalent substitutions and improvements that are made within the spirit and the principle of the present disclosure should fall within the protection scope of the present disclosure.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to the actual demands to realize the purposes of the solutions of the embodiments. A person skilled in the art can understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the calculating and processing device according to the embodiments of the present disclosure may be implemented by using a microprocessor or a digital signal processor (DSP) in practice. The present disclosure may also be implemented as apparatus or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

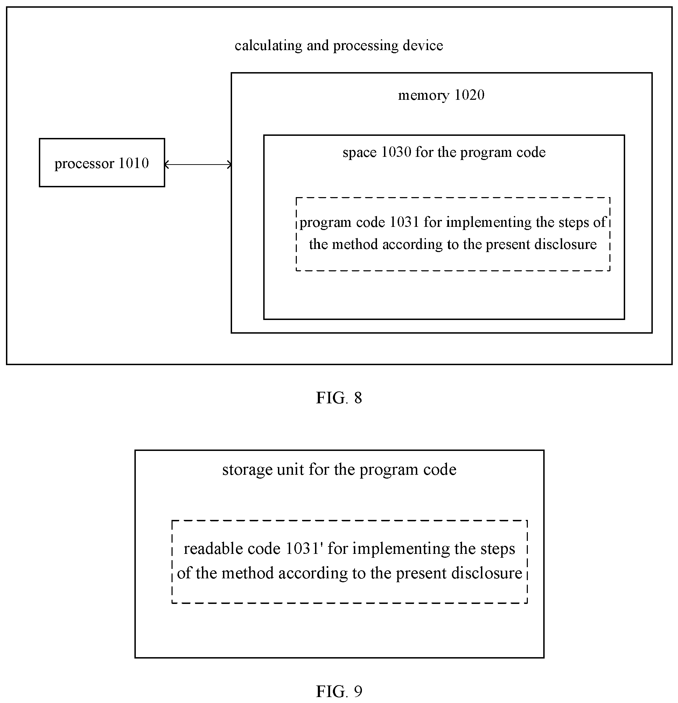

For example, FIG. 8 shows a calculating and processing device that can implement the method according to the present disclosure. The calculating and processing device traditionally comprises a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 9. The storage unit may have storage segments or storage spaces with similar arrangement to the memory 1020 of the calculating and processing device in FIG. 8. The program codes may, for example, be compressed in a suitable form. Generally, the storage unit contains a computer-readable code 1031', which can be read by a processor like 1010. When those codes are executed by the calculating and processing device, the codes cause the calculating and processing device to implement each of the steps of the method described above.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

The description provided herein describes many concrete details. However, it can be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present disclosure may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

## Claims

1. A method for controlling a DCDC converter, wherein the method is applied to a hybrid-power vehicle, and the method comprises:
acquiring a first preset value corresponding to an input-terminal power according to a current limit value of an output terminal and an actual voltage value of the output terminal;
acquiring a second preset value corresponding to the input-terminal power according to a maximum discharging power of a high-voltage battery and an actual generated power of an electric motor; and
determining a minimum value of the first preset value and the second preset value to be an input-terminal target-power limit value.

2. The method according to claim 1, wherein acquiring the first preset value corresponding to the input-terminal power according to the current limit value and the actual voltage value of the output-terminal comprises:
acquiring the current limit value and the actual voltage value of the output terminal;
acquiring a conversion efficiency of the DCDC converter; and
determining the first preset value corresponding to the input-terminal power according to the current limit value and the actual voltage value of the output terminal and the conversion efficiency of the DCDC converter.

3. The method according to claim 2, wherein acquiring the current limit value of the output terminal comprises:
acquiring a current protection value of a low-voltage loop and a storage-battery current limit value, wherein a low-voltage loop, including at least a storage battery, is connected at the output terminal of the DCDC converter; and
determining the current limit value of the output terminal according to the current protection value and the storage-battery current limit value.

4. The method according to claim 1, wherein acquiring the second preset value corresponding to the input-terminal power according to the maximum discharging power of the high-voltage battery and the actual discharging power of the electric motor:
when the electric motor is in a driving state, determining the maximum discharging power of a high-voltage battery to be the second preset value corresponding to the input-terminal power.

5. The method according to claim 1, wherein determining the second preset value corresponding to the input-terminal power according to the maximum discharging power of the high-voltage battery and the actual discharging power of the electric motor, comprises:
when the electric motor is in a generation state, determining a sum of an absolute value of the maximum generated power of the high-voltage battery and an absolute value of the actual discharging power of the electric motor to be the second preset value corresponding to the input-terminal power.

6. The method according to claim 1, wherein determining the second preset value corresponding to the input-terminal power according to the maximum generated power of the high-voltage battery and the actual discharging power of the electric motor comprises:
when the electric motor is in a generation state and the high-voltage battery is in a charging state, determining an absolute value of the actual discharging power of the electric motor to be the second preset value corresponding to the input-terminal power.

7. An apparatus for controlling a DCDC converter, wherein the apparatus is applied to a hybrid-power vehicle, and the apparatus comprises:
a first acquisition module configured for, acquiring a first preset value corresponding to an input-terminal power according to a current limit value of an output-terminal and an actual voltage value of the output-terminal;
a second acquisition module configured for, acquiring a second preset value corresponding to the input-terminal power according to a maximum discharging power of a high-voltage battery and an actual generated power of an electric motor; and
a determining module configured for determining a minimum value of the first preset value and the second preset value to be an input-terminal target-power limit value.

8. The apparatus according to claim 7, wherein the first acquisition module comprises:
a first acquisition submodule configured for acquiring the current limit value and the actual voltage value of the output terminal;
a second acquisition submodule configured for acquiring a conversion efficiency of the DCDC converter; and
a first determining submodule configured for, determining the first preset value corresponding to the input-terminal power according to the current limit value and the actual voltage value of the output terminal and the conversion efficiency of the DCDC converter.

9. The apparatus according to claim 8, wherein the first acquisition submodule comprises:
an acquisition unit configured for acquiring a current protection value of a low-voltage loop and a storage-battery current limit value, wherein a low-voltage loop, including at least a storage battery, is connected at the output terminal of the DCDC converter; and
a first determining unit configured for, determining the current limit value of the output terminal according to the current protection value and the storage-battery current limit value.

10. The apparatus according to claim 7, wherein the second acquisition module comprises:
a second determining submodule configured for, when an electric motor is in a driving state, determining the maximum discharging power of the high-voltage battery to be the second preset value corresponding to the input-terminal power.

11. The apparatus according to claim 7, wherein the second acquisition module comprises:
a third determining submodule configured for, when the electric motor is in a generation state, determining a sum of an absolute value of the maximum discharging power of the high-voltage battery and an absolute value of the actual discharging power of the electric motor to be the second preset value corresponding to the input-terminal power.

12. The apparatus according to claim 7, wherein the second acquisition module comprises:
a fourth determining submodule configured for, when the electric motor is in a generation state and the high-voltage battery is in a charging state, determining an absolute value of the actual discharging power of an electric motor to be the second preset value corresponding to the input-terminal power.

13. A calculating and processing device, wherein the calculating and processing device comprises:
a memory (1020) storing a computer-readable code; and
one or more processors (1010), wherein when the computer-readable code is executed by the one or more processors (1010), the calculating and processing device implements the method for controlling a DCDC converter according to any one of claims 1-6.

14. A computer program, wherein the computer program comprises a computer-readable code, and when the computer-readable code is executed in a calculating and processing device, the computer-readable code causes the calculating and processing device to implement the method for controlling a DCDC converter according to any one of claims 1-6.

15. A computer-readable medium, wherein the computer-readable medium stores the computer program according to claim 14.

## Patentansprüche

1. Verfahren zur Steuerung eines DC-DC-Wandlers, wobei das Verfahren bei einem Hybridfahrzeug angewendet wird und das Verfahren umfasst:
Erfassen eines ersten voreingestellten Wertes, der einer Eingangsanschlussleistung entspricht, gemäß einem Stromgrenzwert und einem Ist-Spannungswert eines Ausgangsanschlusses;
Erfassen eines zweiten voreingestellten Wertes, welcher der Eingangsanschlussleistung entspricht, gemäß einer maximalen Entladeleistung einer Hochspannungsbatterie und der erzeugten Ist-Leistung eines Elektromotors; und
Bestimmen eines Mindestwerts aus dem ersten voreingestellten Wert und dem zweiten voreingestellten Wert als Eingangsanschluss-Zielleistungsgrenzwert.

2. Verfahren nach Anspruch 1, wobei das Erfassen des ersten voreingestellten Werts, welcher der Eingangsanschlussleistung entspricht, gemäß dem Stromgrenzwert und dem Ist-Spannungswert des Ausgangsanschlusses umfasst:
Erfassen des Stromgrenzwerts und des Ist-Spannungswerts des Ausgangsanschlusses;
Erfassen eines Umwandlungswirkungsgrads des DC-DC-Wandlers; und
Bestimmen des ersten voreingestellten Werts, welcher der Eingangsanschlussleistung entspricht, gemäß dem Stromgrenzwert und dem Ist-Spannungswert des Ausgangsanschlusses und dem Umwandlungswirkungsgrad des DC-DC-Wandlers.

3. Verfahren nach Anspruch 2, wobei das Erfassen des Stromgrenzwerts des Ausgangsanschlusses umfasst:
Erfassen eines Stromschutzwerts einer Niederspannungsschleife und eines Speicherbatterie-Stromgrenzwerts, wobei eine Niederspannungsschleife, die mindestens eine Speicherbatterie aufweist, an den Ausgangsanschluss des DC-DC-Wandlers angeschlossen ist; und
Bestimmen des Stromgrenzwerts des Ausgangsanschlusses gemäß dem Stromschutzwert und dem Speicherbatterie-Stromgrenzwert.

4. Verfahren nach Anspruch 1, wobei das Erfassen des zweiten voreingestellten Werts, welcher der Eingangsanschlussleistung entspricht, gemäß der maximalen Entladeleistung der Hochspannungsbatterie und der Ist-Entladeleistung des Elektromotors umfasst:
wenn sich der Elektromotor in einem Antriebszustand befindet, Bestimmen der maximalen Entladeleistung einer Hochspannungsbatterie als den zweiten voreingestellten Wert, welcher der Eingangsanschlussleistung entspricht.

5. Verfahren nach Anspruch 1, wobei das Bestimmen des zweiten voreingestellten Werts, welcher der Eingangsanschlussleistung entspricht, gemäß der maximalen Entladeleistung der Hochspannungsbatterie und der Ist-Entladeleistung des Elektromotors umfasst:
wenn sich der Elektromotor in einem Erzeugungszustand befindet, Bestimmen einer Summe aus einem Absolutwert der maximalen erzeugten Leistung der Hochspannungsbatterie und einem Absolutwert der Ist-Entladeleistung des Elektromotors als den zweiten voreingestellten Wert, welcher der Eingangsanschlussleistung entspricht.

6. Verfahren nach Anspruch 1, wobei das Bestimmen des zweiten voreingestellten Werts, welcher der Eingangsanschlussleistung entspricht, gemäß der maximalen erzeugten Leistung der Hochspannungsbatterie und der Ist-Entladeleistung des Elektromotors umfasst:
wenn sich der Elektromotor in einem Erzeugungszustand befindet und sich die Hochspannungsbatterie in einem Ladezustand befindet, Bestimmen eines Absolutwerts der Ist-Entladeleistung des Elektromotors als den zweiten voreingestellten Wert, welcher der Eingangsanschlussleistung entspricht.

7. Vorrichtung zur Steuerung eines DC-DC-Wandlers, wobei die Vorrichtung bei einem Hybridfahrzeug angewendet wird und die Vorrichtung aufweist:
ein erstes Erfassungsmodul, das dazu ausgebildet ist, einen ersten voreingestellten Wert zu erfassen, der einer Eingangsanschlussleistung entspricht, gemäß einem Stromgrenzwert eines Ausgangsanschlusses und einem Ist-Spannungswert des Ausgangsanschlusses;
ein zweites Erfassungsmodul, das dazu ausgebildet ist, einen zweiten voreingestellten Wert zu erfassen, welcher der Eingangsanschlussleistung entspricht, gemäß einer maximalen Entladeleistung einer Hochspannungsbatterie und der erzeugten Ist-Leistung eines Elektromotors; und
ein Bestimmungsmodul, das dazu ausgebildet ist, einen Mindestwert aus dem ersten voreingestellten Wert und dem zweiten voreingestellten Wert als Eingangsanschluss-Zielleistungsgrenzwert zu bestimmen.

8. Vorrichtung nach Anspruch 7, wobei das erste Erfassungsmodul aufweist:
ein erstes Erfassungssubmodul, das dazu ausgebildet ist, den Stromgrenzwert und den Ist-Spannungswert des Ausgangsanschlusses zu erfassen;
ein zweites Erfassungssubmodul, das dazu ausgebildet ist, einen Umwandlungswirkungsgrad des DC-DC-Wandlers zu erfassen; und
ein erstes Bestimmungssubmodul, das dazu ausgebildet ist, einen ersten voreingestellten Wert, welcher der Eingangsanschlussleistung entspricht, gemäß dem Stromgrenzwert und dem Ist-Spannungswert des Ausgangsanschlusses und dem Umwandlungswirkungsgrad des DC-DC-Wandlers zu bestimmen.

9. Vorrichtung nach Anspruch 8, wobei das erste Erfassungssubmodul aufweist:
eine Erfassungseinheit, die dazu ausgebildet ist, einen Stromschutzwert einer Niederspannungsschleife und eines Speicherbatterie-Stromgrenzwerts zu erfassen, wobei eine Niederspannungsschleife, die mindestens eine Speicherbatterie aufweist, an den Ausgangsanschluss des DC-DC-Wandlers angeschlossen ist; und
eine erste Bestimmungseinheit, die dazu ausgebildet ist, den Stromgrenzwert des Ausgangsanschlusses gemäß dem Stromschutzwert und dem Speicherbatterie-Stromgrenzwert zu bestimmen.

10. Vorrichtung nach Anspruch 7, wobei das zweite Erfassungsmodul aufweist:
ein zweites Bestimmungssubmodul, das dazu ausgebildet ist, wenn sich ein Elektromotor in einem Antriebszustand befindet, die maximale Entladeleistung einer Hochspannungsbatterie als den zweiten voreingestellten Wert, welcher der Eingangsanschlussleistung entspricht, zu bestimmen.

11. Vorrichtung nach Anspruch 7, wobei das zweite Erfassungsmodul aufweist:
ein drittes Bestimmungssubmodul, das dazu ausgebildet ist, wenn sich der Elektromotor in einem Erzeugungszustand befindet, eine Summe aus einem Absolutwert der maximalen Entladeleistung der Hochspannungsbatterie und einem Absolutwert der Ist-Entladeleistung des Elektromotors als den zweiten voreingestellten Wert, welcher der Eingangsanschlussleistung entspricht, zu bestimmen.

12. Vorrichtung nach Anspruch 7, wobei das zweite Erfassungsmodul aufweist:
ein viertes Bestimmungssubmodul, das dazu ausgebildet ist, wenn sich der Elektromotor in einem Erzeugungszustand befindet und sich die Hochspannungsbatterie in einem Ladezustand befindet, einen Absolutwert der Ist-Entladeleistung eines Elektromotors als den zweiten voreingestellten Wert, welcher der Eingangsanschlussleistung entspricht, zu bestimmen.

13. Rechen- und Verarbeitungsvorrichtung, wobei die Rechen- und Verarbeitungsvorrichtung aufweist:
einen Speicher (1020), auf dem ein computerlesbarer Code gespeichert ist; und
einen oder mehrere Prozessoren (1010), wobei, wenn der computerlesbare Code von dem einen oder den mehreren Prozessoren (1010) ausgeführt wird, die Rechen- und Verarbeitungsvorrichtung das Verfahren zur Steuerung eines DC-DC-Wandlers nach einem der Ansprüche 1-6 implementiert.

14. Computerprogramm, wobei das Computerprogramm einen computerlesbaren Code aufweist und, wenn der computerlesbare Code in einer Rechen- und Verarbeitungsvorrichtung ausgeführt wird, der computerlesbare Code bewirkt, dass die Rechen- und Verarbeitungsvorrichtung das Verfahren zur Steuerung eines DC-DC-Wandlers nach einem der Ansprüche 1-6 implementiert.

15. Computerlesbares Medium, wobei das computerlesbare Medium das Computerprogramm nach Anspruch 14 speichert.

## Revendications

1. Procédé de commande d'un convertisseur courant continu/courant continu, dans lequel le procédé est appliqué à un véhicule à puissance hybride, et le procédé comprend les étapes consistant à :
acquérir une première valeur prédéfinie correspondant à une puissance de borne d'entrée conformément à une valeur de limite de courant d'une borne de sortie et à une valeur de tension courante de la borne de sortie ;
acquérir une seconde valeur prédéfinie correspondant à la puissance de borne d'entrée conformément à une puissance maximale de décharge d'une batterie haute tension et à une puissance courante générée d'un moteur électrique ; et
déterminer une valeur minimale de la première valeur prédéfinie et de la seconde valeur prédéfinie comme étant une valeur de limite de puissance cible de borne d'entrée.

2. Procédé selon la revendication 1, dans lequel l'étape d'acquisition de la première valeur prédéfinie correspondant à la puissance de borne d'entrée conformément à la valeur de limite de courant et à la valeur de tension courante de la borne de sortie consiste à :
acquérir la valeur de limite de courant et la valeur de tension courante de la borne de sortie ;
acquérir un rendement de conversion du convertisseur courant continu/courant continu ; et
déterminer la première valeur prédéfinie correspondant à la puissance de borne d'entrée conformément à la valeur de limite de courant et à la valeur de tension courante de la borne d'entrée et au rendement de conversion du convertisseur courant continu/courant continu.

3. Procédé selon la revendication 2, dans lequel l'étape d'acquisition de la valeur de limite de courant de la borne de sortie consiste à :
acquérir une valeur de protection de courant d'une boucle basse tension et une valeur de limite de courant de batterie d'accumulation, dans lequel une boucle basse tension, comprenant au moins une batterie d'accumulation, est connectée au niveau de la borne de sortie du convertisseur courant continu/courant continu ; et
déterminer la valeur de limite de courant de la borne de sortie conformément à la valeur de protection de courant et à la valeur de limite de courant de batterie d'accumulation.

4. Procédé selon la revendication 1, dans lequel l'étape d'acquisition de la seconde valeur prédéfinie correspondant à la puissance de borne d'entrée conformément à la puissance maximale de décharge de la batterie haute tension et à la puissance de décharge courante du moteur électrique consiste à :
lorsque le moteur électrique est dans un état d'entraînement, déterminer la puissance maximale de décharge de la batterie haute tension comme étant la seconde valeur prédéfinie correspondant à la puissance de borne d'entrée.

5. Procédé selon la revendication 1, dans lequel l'étape de détermination de la seconde valeur prédéfinie correspondant à la puissance de borne d'entrée conformément à la puissance maximale de décharge de la batterie haute tension et à la puissance de décharge courante du moteur électrique consiste à :
lorsque le moteur électrique est dans un état de génération, déterminer une somme d'une valeur absolue de la puissance maximale générée de la batterie haute tension et d'une valeur absolue de la puissance de décharge courante du moteur électrique comme étant la seconde valeur prédéfinie correspondant à la puissance de borne d'entrée.

6. Procédé selon la revendication 1, dans lequel l'étape de détermination de la seconde valeur prédéfinie correspondant à la puissance de borne d'entrée conformément à la puissance maximale générée de la batterie haute tension et à la puissance de décharge courante du moteur électrique consiste à :
lorsque le moteur électrique est dans un état de génération et que la batterie haute tension est dans un état de charge, déterminer une valeur absolue de la puissance de décharge courante du moteur électrique comme étant la seconde valeur prédéfinie correspondant à la puissance de borne d'entrée.

7. Appareil de commande d'un convertisseur courant continu/courant continu, dans lequel l'appareil est appliqué à un véhicule à puissance hybride, et l'appareil comprend :
un premier module d'acquisition configuré pour acquérir une première valeur prédéfinie correspondant à une puissance de borne d'entrée conformément à une valeur de limite de courant d'une borne de sortie et à une valeur de tension courante de la borne de sortie ;
un second module d'acquisition configuré pour acquérir une seconde valeur prédéfinie correspondant à la puissance de borne d'entrée conformément à une puissance maximale de décharge d'une batterie haute tension et à une puissance courante générée d'un moteur électrique ; et
un module de détermination configuré pour déterminer une valeur minimale de la première valeur prédéfinie et de la seconde valeur prédéfinie comme étant une valeur de limite de puissance cible de borne d'entrée.

8. Appareil selon la revendication 7, dans lequel le premier module d'acquisition comprend :
un premier sous-module d'acquisition configuré pour acquérir la valeur de limite de courant et la valeur de tension courante de la borne de sortie ;
une second sous-module d'acquisition configuré pour acquérir un rendement de conversion du convertisseur courant continu/courant continu ; et
un premier sous-module de détermination configuré pour déterminer la première valeur prédéfinie correspondant à la puissance de borne d'entrée conformément à la valeur de limite de courant et à la valeur de tension courante de la borne de sortie et au rendement de conversion du convertisseur courant continu/courant continu.

9. Appareil selon la revendication 8, dans lequel le premier sous-module d'acquisition comprend :
une unité d'acquisition configurée pour acquérir une valeur de protection de courant d'une boucle basse tension et une valeur de limite de courant de batterie d'accumulation, dans lequel une boucle basse tension, comprenant au moins une batterie d'accumulation, est connectée au niveau de la borne de sortie du convertisseur courant continu/courant continu ; et
une première unité de détermination configurée pour déterminer la valeur de limite de courant de la borne de sortie conformément à la valeur de protection de courant et à la valeur de limite de courant de batterie d'accumulation.

10. Appareil selon la revendication 7, dans lequel le second module d'acquisition comprend :
un deuxième sous-module de détermination configuré pour, lorsque le moteur électrique est dans un état d'entraînement, déterminer la puissance maximale de décharge de la batterie haute tension comme étant la seconde valeur prédéfinie correspondant à la puissance de borne d'entrée.

11. Appareil selon la revendication 7, dans lequel le second module d'acquisition comprend :
un troisième sous-module de détermination configuré pour, lorsque le moteur électrique est dans un état de génération, déterminer une somme d'une valeur absolue de la puissance maximale de décharge de la batterie haute tension et d'une valeur absolue de la puissance de décharge courante du moteur électrique comme étant la seconde valeur prédéfinie correspondant à la puissance de borne d'entrée.

12. Appareil selon la revendication 7, dans lequel le second module d'acquisition comprend :
un quatrième sous-module de détermination configuré pour, lorsque le moteur électrique est dans un état de génération et que la batterie haute tension est dans un état de charge, déterminer un valeur absolue de la puissance de décharge courante d'un moteur électrique comme étant la seconde valeur prédéfinie correspondant à la puissance de borne d'entrée.

13. Dispositif de calcul et de traitement, dans lequel le dispositif de calcul et de traitement comprend :
une mémoire (1020) maintenant un code lisible par ordinateur ; et
un ou plusieurs processeurs (1010), dans lequel, lorsque le code lisible par ordinateur est exécuté par le ou les processeurs (1010), le dispositif de calcul et de traitement met en œuvre le procédé de commande d'un convertisseur courant continu/courant continu selon l'une quelconque des revendications 1 à 6.

14. Programme d'ordinateur, dans lequel le programme d'ordinateur comprend un code lisible par ordinateur, et lorsque le code lisible par ordinateur est exécuté dans un dispositif de calcul et de traitement, le code lisible par ordinateur amène le dispositif de calcul et de traitement à mettre en œuvre le procédé de commande d'un convertisseur courant continu/courant continu selon l'une quelconque des revendications 1 à 6.

15. Support lisible par ordinateur, dans lequel le support lisible par ordinateur maintient le programme d'ordinateur selon la revendication 14.
